# EUROPEAN PATENT SPECIFICATION

(11) **EP 1 679 874 B1**
(45) Date of publication and mention of the grant of the patent: **21.05.2008**
(21) Application number: 05000404.3
(22) Date of filing: 11.01.2005
(51) Int. Cl.: H04M 9/08

(54) **Feedback reduction in communication systems**
Verringerung der Rückkopplung von Kommunikationssystemen
Réduction du couplage pour des systèmes de communication

(43) Date of publication of application: 12.07.2006
(73) Proprietor: Harman Becker Automotive Systems GmbH, 76307 Karlsbad (DE)
(72) Inventor: Haulick, Tim, 89143 Blaubeuren (DE); Schmidt, Gerhard Uwe, 89081 Ulm (DE); Lenhardt, Harald, 89073 Ulm (DE)
(74) Representative: Grünecker, Kinkeldey, Stockmair & Schwanhäusser Anwaltssozietät

(56) References cited:
- US-A1- 2004 252 826
- LE BOUQUIN JEANNES, SCALART, FAUCON, BEAUGEANT: "Combined Noise and Echo Reduction in Hands-Free Systems: A Survey" IEEE TRANSACTIONS ON SPEECH AND AUDIO PROCESSING, [Online] vol. 9, no. 8, November 2001 (2001-11), XP002335495 Retrieved from the Internet: URL:http://ieeexplore.ieee.org/iel5/89/208 56/00966084.pdf?arnumber=966084> [retrieved on 2005-07-11]
- TURBIN V ET AL: "Comparison of three post-filtering algorithms for residual acoustic echo reduction" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 1, 21 April 1997 (1997-04-21), pages 307-310, XP010226196 ISBN: 0-8186-7919-0

## Description

### Field of Invention

The present invention relates to audio signal processing with feedback reduction. In particular, it relates to feedback reduction in speech communication systems.

### Prior Art

In two-way speech communication of two parties mutually transmitting and receiving audio signals, in particular, speech signals, some suppression of signals of the remote subscriber that are emitted by the loudspeakers and therefore received again by the microphone(s) at the near side is of particular importance. Otherwise, unpleasant feedback effects can severely affect the quality and intelligibility of voice conversation. In the worst case, acoustic feedback can even lead to a complete breakdown of communication.

One prominent example for speech communication suffering from feedbacks is hands-free voice communication in vehicles. Present vehicle communication systems not only allow for hands-free telephony with remote subscribers at a far end outside the vehicle but also for inter-cabin communication. Microphones and loudspeaker provided for front-seat and back-seat passengers allow for a better acoustical understanding, in particular, if background noises increase during high-speed traveling on motorways.

Another well-known example for disturbing feedback effects occurs in the context of sounds systems used in closed rooms as in concert halls. Music, e.g., output by loudspeakers that are distributed in the room should not be fed back to the microphones used, e.g., on stage.

In the art, efforts have been made to solve the problem of acoustic feedbacks by utilizing non-adaptive filters as notch (Kerb) filters that pass all frequencies except those in a stop band centered on a center frequency of the feedback. One main disadvantage in using such non-adaptive filters results from their incapability to adjust to temporally changing dominant feedback frequencies. Changing temperatures, e.g., in concert halls or vehicular cabins influence the dominant feedback frequencies and thus, non-adaptive filters necessarily fail to minimize feedbacks in a real environment over a considerable time. The only way out would be to replace the primarily used notch filter with a second one optimized for a different blocking frequency. This not only represents a troublesome but also an again short-living solution.

Alternatively, adaptive filters have been used to reduce acoustic feedback disturbances. Adaptive feedback suppression filters are digital filters including algorithms, as a normalized least mean square (NLMS) algorithm, which permanently re-calculate the filter coefficients. Thereby, the adaptive filters are capable to follow a temporal variability of the dominant feedback frequency or frequencies to be suppressed.

However, the adaptive filters used for feedback reduction work similar to prediction error (PE) filters, which implies that for adjusting them a minimization of the power output of the loudspeaker signals must previously be performed. In the context of acoustic feedback, the problem arises that the adaptive filter suppresses the dominant feedback frequency thereby reducing the power output at that frequency. The reduced power output though results in a reduction of the amount of suppression of the dominant feedback frequency. As a result, the suppression of the acoustic feedback is not stationary but exhibits oscillating suppression characteristics with still perceptible and annoying acoustic feedback effects.

A further method to reduce acoustical feedback effects that is suggested in the art is based on the utilization of compensation filters similar to the usage of echo compensation filters in mobile phones. By means of linear or non-linear adaptive filters, a replica of the acoustic feedback can be synthesized and a compensation signal can be obtained from the received signal of the loudspeakers. The compensation signal can be subtracted from the sending signal of the microphone thereby generating a resulting signal with improved intelligibility to be sent to the remote subscriber.

R. Le Bouquin Jeannes et al., "Combined Noise and Echo Reduction in Hands-Free Systems: A Survey", IEEE Transactions on Speech and Audio Processing, Vol. 9, No. 8, November 2001, pages 808 - 820, disclose a review of methods for combined noise reduction and echo reduction in hands-free systems and, in particular echo canceling and post-filtering based on the estimation of a closed-loop post-filter.

The US patent application US 2004/0252826 A1 discloses a method for echo canceling based on estimated echo signals generated by filtering incoming communication signals through an adaptive transversal filter.

V. Turbin et al., in a paper entitled "Comparison of Three Post-Filtering Algorithms for Residual Acoustic Echo Reduction", IEEE International Conference in Munich, Germany 21 - 24 April 1997, Los Alamos, CA, USA, IEEE Comput. Soc., US, vol. 1, 21 April 1997, pages 307 - 310, describe an echo control system comprising an echo canceller and a post-filter implemented in an open-loop structure in the frequency domain.

However, in practical applications it proves very difficult to adapt the filter coefficients with both a high accuracy, i.e. high efficiency of reduction of feedback effects, and a tolerable speed of convergence of the employed algorithms. The impulse response can be identified definitely for the frequencies showing the strongest feedback effects only, thereby allowing, in principle, adaptation of the filter coefficients for these frequencies, whereas the filters do not work reliably for other frequencies. Consequently, perceptible artifacts caused by acoustic feedback still affect the intelligibility of acoustic signals.

Given the above-mentioned drawbacks and deficiencies in the art it is the object of the present invention to provide a system and a method for acoustic and, in particular, speech signal processing showing an improved feedback reduction. A particular problem underlying the present invention is to improve communication in a vehicle by reducing feedback artifacts.

### Description of the invention

The above mentioned problems are solved by a method for audio signal processing with feedback reduction according to claim 1 and a system for audio signal processing with feedback reduction according to claim 9.

According to claim 1 it is provided a method for processing a microphone signal to obtain an output signal with acoustic feedback reduction, comprising
processing the microphone signal (y(n)) by an adaptive feedback suppression filtering means (3, 3') in a signal path and in a non-signal path;
processing the microphone signal (y(n)) by an adaptive feedback compensation filtering means (5); and
generating a first input signal from the microphone signal (y(n)) and the convolution result of an estimated impulse response obtained by the adaptive feedback compensation filtering means (5) and feedback components of the microphone signal (y(n)) previously obtained by processing the microphone signal (y(n)) by the adaptive feedback suppression filtering means (3, 3') and inputting the first input signal in the non-signal path, and wherein
the microphone signal (y(n)) is input in the signal path and the filter coefficients of the adaptive feedback suppression filtering means (3, 3') are adapted on the basis of the first input signal in the non-signal path and subsequently the adapted filter coefficients are used in the signal path.

It is also provide a system for audio signal processing with feedback reduction, comprising
an adaptive feedback compensation filtering means (5);
an adaptive feedback suppression filtering means (3, 3') comprising a signal path and a non-signal path and configured to adapt its filter coefficients in the non-signal path and to subsequently use the filter coefficients adapted in the non-signal path in the signal path;
means for generating a first input signal for the adaptive feedback suppression filtering means (3, 3') from the microphone signal (y(n)) and the convolution result of an esti mated impulse response obtained by the adaptive feedback compensation filtering means (5) and feedback components of the microphone signal (y(n)) previously obtained by processing the microphone signal (y(n)) by the adaptive feedback suppression filtering means (3, 3'); and wherein
the adaptive feedback suppression filtering means (3, 3') is configured to be adapted on the basis of the first input signal, and
the system is configured to input the first signal in the non-signal path, and to input the microphone signal (y(n)) in the signal path.

An audio signal is detected by one or more microphones and a, preferably digitized, microphone signal can be generated. Some pre-processing for generating a microphone signal may comprise a Fast Fourier Transform and thus, may result in a complex-valued microphone signal.

Before any signals are input in the feedback suppression filtering means they preferably are time delayed, e.g. with a delay of about 2 ms, in order to avoid suppressing short time correlations, i.e., in particular, the short time spectral envelope. Without the short time spectral envelope the processed speech signal would become rather artificial.

The feedback suppression filtering means and the feedback compensation filtering means both are adaptive ones. The respective filter coefficients are not pre-determined but adapted during the signal processing. It should be noted that any processing of the microphone signal does not exclusively mean to input the microphone signal itself into the filter paths, but rather comprises processing signals representing arbitrary modifications or processed variants of the microphone signal.

The suppression filtering means generates feedback components of the microphone signal that subsequently can be subtracted from the latter. The compensation filtering means provides an estimate for the impulse response that can be subtracted from the microphone signal. It may be sufficient to adapt the filter coefficients of the compensation filtering means for the dominant feedback frequency or dominant feedback frequencies only.

The result of the adaptation process of the feedback compensation filtering means influences the processing of an input signal for the feedback reduction filtering means. Accordingly, the feedback suppression depends on the feedback compensation and advantages of both filtering methods can result is a desirable synergetic effect.

The method and the system according to claims 1 and 14, respectively, solve the above-mentioned problems in improving the sound quality and, in particular, speech intelligibility in speech signal processing. Acoustic feedback effects, in particular, in communication systems used in closed rooms, e.g., vehicular cabins, are reduced with a higher efficiency and reliability than described in the art. Besides, some increase of volume above the presently tolerable levels may be possible without an intolerable loss in signal quality.

The combined usage of feedback suppression and feedback compensation filter structures results in a stable feedback reduction without significant oscillations of the suppression characteristics. Ideally, feedback effects are reduced below perceptibility.

According to one embodiment of the method a first input signal for the adaptive feedback suppression filtering means can be generated on the basis of the adapted filter coefficients of the adaptive feedback compensation filtering means and the filter coefficients of the adaptive feedback suppression filtering means can be adapted on the basis of the first input signal.

The feedback compensation filtering means can be used to estimate an impulse response and the filter coefficients are accordingly adapted. If the thus adapted compensation filtering means is used to generate the first input signal for the feedback suppression filtering means, the dependence of the latter on the compensation filter is realized in an efficient way. Consequently, the output signal profits from both filtering processes that do not operate independently from each other giving rise to an improved intelligibility of the speech signal.

Further, the processing by the adaptive feedback suppression filtering means can be performed in a signal path and in a non-signal path, the adaptation of the filter coefficients of the adaptive feedback suppression filtering means can be performed in the non-signal path and subsequently the adapted filter coefficients can be used in the signal path.

The separation into the signal path and the non-signal path, i.e. a shadow path, for signal processing in the background helps to avoid temporarily resulting artifacts due to the feedback compensation being mixed with the output signal. Different from the art such artifacts generated during the adaptation of the compensation filtering means only influence the signal input, i.e. a working signal, in the shadow path and not the output audio signal.

After completion of the adaptation of the suppression filtering means on the basis of the achieved filter coefficients of the compensation filtering means, the adapted filter coefficients may be used without modifications in the signal path to generate one or more rather accurate feedback components that can be subtracted from the microphone signal. Usage of the unmodified copy guarantees direct dependence of the suppression filtering process on the compensation filtering process and keeps the employed algorithms clearly arranged. Depending of the experiences made in particular applications, however, some modifications of the filter coefficients obtained in the shadow path may be carried out before using them in the signal path.

According to one specific realization of the disclosed method may
the first input signal be input in the non-signal path; and
the first input signal be generated from the microphone signal and the convolution result of an estimated impulse response obtained by the adaptive feedback compensation filtering means and feedback components of the microphone signal previously obtained by processing the microphone signal by the adaptive feedback suppression filtering means, and
the microphone signal be input in the signal path.

The portion of the microphone signal that was subtracted is modified and added to the first input signal of the shadow path. The microphone signal is corrected for feedback components by the feedback suppression filtering means. At the beginning of the processing of the microphone signal, the feedback components may be primarily obtained by some pre-determined filter coefficients. In general, the filter coefficients of the feedback suppression filtering means are obtained on the basis of the first input signal. The first input signal serves as a working signal generated by means of the feedback compensation filtering means that provides an impulse response.

By this method, a particularly efficient realization of the entire feedback reduction comprising feedback suppression in dependence on feedback compensation is achieved. Artifacts generated by the feedback compensation filtering means only influence the working signal rather than affecting the output signal directly. The necessary algebraic manipulations can be performed efficiently by robust and well-approved algorithms known in the art.

The usage of an adaptive or non-adaptive decorrelation filtering means may enhance the convergence characteristics of the adaptation algorithms. No inverse decorrelation filtering means is necessary, if the signal decorrelation occurs in the shadow path only.

Alternatively, the following steps for audio signal processing with feedback reduction may be performed. The first input signal may be input in the non-signal path and
the first input signal may be generated from a reduced microphone signal generated by a subtraction of an estimated feedback signal obtained by the adaptive feedback compensation filtering means from the microphone signal and the convolution result of an estimated impulse response obtained by the adaptive feedback compensation filtering means and feedback components of the microphone signal previously obtained by processing the reduced microphone signal by the adaptive feedback suppression filtering means, and
the microphone signal reduced by the estimated impulse response that is obtained by the feedback compensation means may be input in the signal path.

As a result, the feedback compensation is carried out in the signal path. Whereas in this case some artifacts from the compensation processing may occur in the output signal, this embodiment is particularly advantageous for applications for, e.g., an acoustic hearing apparatus.

Again, the usage of an adaptive or non-adaptive decorrelation filtering means may enhance the convergence characteristics of the adaptation algorithms. An inverse decorrelation filtering means is necessary, since the signal decorrelation occurs in the signal path.

Accordingly, it is provided a method that further may comprise processing the first input signal by an adaptive or non-adaptive decorrelation filtering means and processing the output signal by an inverse decorrelation filtering means. The decorrelated signal may be further noise reduced by an adaptive or non-adaptive noise reduction filtering means.

The adaptive feedback suppression filtering means may comprise a finite impulse response filter or an infinite impulse response filter.

Whereas finite impulse response (FIR) filters are stable, since no feedback branch is provided, recursive infinite impulse response (IIR) filters typically meet a given set of specifications with a much lower filter order than a corresponding FIR filter. Feedback suppression for a very narrow band typically can be achieved more efficiently by IIR filters. The latter suffer, however, from the need of permanent stability checks.

Adaptation of the filter coefficients of the adaptive feedback suppression filtering means and/or the adaptive feedback compensation filtering means can be performed on the basis of a normalized least mean square algorithm that provides a well approved and robust calculation means with satisfying convergence characteristics.

In order to further enhance the intelligibility of the final audio signal, in particular, speech signal, the microphone signal and/or the output signal may be processed by an adaptive and/or non-adaptive noise reduction filtering means.

If more than one microphone is used to detect audio signals, the microphone signal used for the signal processing including feedback reduction may be obtained by an adaptive or non-adaptive beamforming means that processes signals detected by at least two microphones. Each of the microphones provides a microphone signal input in the beamforming means that subsequently outputs a beamformed signal - herein also referred to as a 'microphone signal' for simplicity - used for the subsequent processing by the feedback compensation and suppression filtering means.

The beamforming means may comprise a blocking matrix and an adaptive noise canceling means and a means configured to subtract noise signals obtained by the adaptive noise canceling means from beamformed signals. The intelligibility of the output audio, in particular, speech signal is enhanced by this kind of noise reduction suitable for processing signals coming from multiple microphone channels.

Furthermore, the present invention provides a computer program product, comprising one or more computer readable media having computer-executable instructions for performing the steps of embodiments of the inventive method for audio signal processing with improved feedback reduction as described above.

The system for audio signal processing with feedback reduction may comprise an adaptive feedback compensation filtering means and an adaptive feedback suppression filtering means configured to be adapted on the basis of the adapted filter coefficients of the adaptive feedback compensation filtering means.

Also, the system may comprise means for generating a first input signal for the adaptive feedback suppression filtering means using the adapted filter coefficients of the adaptive feedback compensation filtering means, and the adaptive feedback suppression filtering means may be configured to be adapted on the basis of the first input signal.

The system can comprise a signal path and a non-signal path and can be configured to adapt its filter coefficients in the non-signal path and to subsequently use the filter coefficients adapted in the non-signal path in the signal path.

The adaptive feedback suppression filtering means may be configured to use the filter coefficients adapted in the non-signal path without modifications in the signal path.

Furthermore, the system may be configured to
generate the first input signal from the microphone signal and the convolution result of an estimated impulse response obtained by the adaptive feedback compensation filtering means and feedback components of the microphone signal previously obtained by processing the microphone signal by the adaptive feedback suppression filtering means; and
input the first signal in the non-signal path, and
input the microphone signal in the signal path.

It may be desired that the system further comprises an adaptive or non-adaptive decorrelation filtering means configured to process the first input signal.

According to one embodiment the system for audio signal processing with feedback reduction may be configured to
generate the first input signal from a reduced microphone signal generated by a subtraction of an estimated feedback signal obtained by the adaptive feedback compensation filtering means from the microphone signal and the convolution result of an estimated impulse response obtained by the adaptive feedback compensation filtering means and feedback components of the microphone signal previously obtained by processing the reduced microphone signal by the adaptive feedback suppression filtering means; and
input the first signal in the non-signal path; and
input the microphone signal reduced by an estimated impulse response that is obtained by the feedback compensation means in the signal path.

In this embodiment also an adaptive or non-adaptive decorrelation filtering means and, additionally, an inverse decorrelation filtering means may be used. Thus, it is provided a system for audio signal processing with feedback reduction comprising an adaptive or non-adaptive decorrelation filtering means configured to process the first input signal and an inverse decorrelation filtering means configured to process the output signal.

The adaptive feedback suppression filtering means used in the embodiments of the inventive system may comprise a finite impulse response filter or an infinite impulse response filter.

The adaptive filtering systems used in the system may be configured to be adapted by means of a normalized least mean square algorithm.

The system may further comprise adaptive and/or non-adaptive noise reduction filtering means.

Moreover, the system can further comprise a microphone array comprising at least two microphones and an adaptive or non-adaptive beamforming means. If a microphone array is used to detect local signals, the microphone array may comprises at least one directional microphone.

Furthermore, the present invention is directed to the use of the previously described systems in a vehicle communication system. An improved feedback reduction is particularly desirable in the acoustically challenging context of communication of the passengers in vehicular cabins.

In addition, it is provided a vehicle communication system for a vehicle comprising one of the above-described systems for audio signal processing with feedback reduction. The system may also comprise directional microphones and loudspeakers located in the vicinity of each seat of the vehicle.

The invention also provides an acoustic hearing apparatus comprising one of the systems described above. In particular, a system performing feedback compensation in the signal path can significantly improve the intelligibility of speech signals detected by the hearing aids. Thus, the quality of the signal output by the hearing aid remains to a higher amount unaffected by the feedback reduction structure as compared to the art. In addition, the effectiveness of feedback reduction is more independent of the fast changing conditions of the feedback path.

Additional features and advantages of the invention will be described with reference to the drawings:
Figure 1 is a block diagram illustrating an embodiment of the method for feedback reduction comprising feedback suppression in the signal path and feedback compensation in the shadow path.
Figure 2 is a block diagram illustrating an embodiment of the method for feedback reduction comprising both feedback suppression and feedback compensation in the signal path.
Figure 3 illustrates a vehicle communication system according to an embodiment of the present invention comprising microphones and loudspeakers provided for each vehicle seat and a signal processing system comprising feedback suppression and compensation filtering means.

In the description, reference is made to the accompanying figures that are meant to illustrate preferred embodiments of the invention. It is to be understood that such embodiments do not represent the full scope of the invention. Similar elements in different Figures have been given the same reference numerals for purposes of consistency and simplicity.

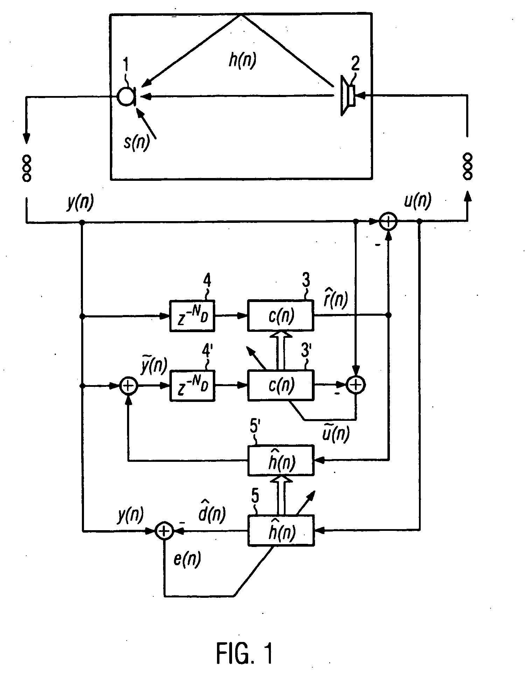

Figure 1 illustrates the principal operation of an example of the herein disclosed method for feedback reduction. In a closed room a microphone 1 detects a speech signal or local signal *s(n)*, e.g. representing part of a verbal utterance of one communication party, which is to be output with minimized disturbances to another party.

In addition to the local signal, *s(n)*, the microphone 1 detects signals from a loudspeaker 2. The total impulse response ***h**(n)* between the loudspeaker 2 and the microphone 1 - or to be more specific of the loudspeaker-room-microphone-system - consists of a mixture of signals coming directly from the loudspeaker 2 and loudspeaker signals reflected by the walls of the closed room. The total impulse response ***h**(n)* shows the reverberating characteristics of the room.

The signals detected by the microphone are pre-processed. The pre-processing may comprise a Fast Fourier Transform and thus, may result in the complex-valued microphone signal *y(n)* where *n* is the frequency bin. If instead of one microphone, a microphone array is used, e.g., an array of directional microphones, the pre-processing may include a time-delay of the different microphone signals. For each microphone signal the time delay has to be computed and compensated, based, e.g., on the geometry of microphones, in order to synchronize the microphone signals corresponding to a desired target signal. The delays correspond to the acoustic time delays for sound traveling with sound velocity and coming from different directions and/or positions.

Furthermore, an adaptive weighted-sum beamforming means may be employed that combines the pre-processed, in particular, time delayed signals of the multiple microphones to obtain one resulting beamformed signal - herein also named microphone signal for simplicity - *y(n)* with an improved signal-to-noise ratio. The beamforming means may contain an adaptive blocking matrix as well as an adaptive noise canceling filter.

The microphone signal *y(n)* has to be corrected for feedback contributions included in the finite impulse response ***h**(n)*. An adaptive feedback suppression filtering means 3 with a coefficient vector ***c**(n)* is therefore provided to reduce acoustic feedback effects. According to the presently discussed embodiment, this filtering means is a finite impulse response (FIR) filter, i.e. there is no feedback branch for the filtered signal and the phases of the signals are not affected. If acoustic feedback effects occur at particular frequencies, the FIR filter tries to suppress these frequencies.

Before any filtering process the microphone signal *y(n)* has to be delayed by a delay unit 4 by N clock rates (where N is to be chosen less than the inverse of the respective feedback frequency; in many applications N may be chosen to cause a delay of about 2 ms) in order to avoid suppressing short time correlations, i.e., in particular, to preserve the short time spectral envelope. Without the short time spectral envelope the processed and output speech signal would be judged as being highly artificially by a human communication partner. Desirably the filter contains from 80 to 120 filter coefficients, if a sampling rate of 16 kHz is assumed. The filter coefficients can be calculated by, e.g., an NLMS algorithm.

In the art the FIR filter is adapted using the microphone signal *y(n)* and the signal to be minimized for feedback effects, i.e. the output signal *u(n)*. According to the present embodiment, however, an artificially generated (working) signal *ỹ*(*n*) is used instead of *y(n)*. The signal *ỹ*(*n*) is generated by means of a feedback compensation filtering means 5 comprising the vector of adaptable filter coefficients *ĥ*(*n*). As for the FIR filter the feedback compensation filtering means may be realized by several filter components working independently, e.g., in different frequency ranges.

By means of the feedback compensation filtering means 5 the real impulse response ***h**(n)* between the loudspeaker 2 and the microphone 1 is modeled by an estimated impulse response. By the convolution of the output signal *u(n)* with the estimated impulse response an estimated feedback signal *d̂*(*n*) can be obtained. The signal *e(n)* obtained by subtracting the estimated feedback signal *d̂(n)* from the microphone signal *y(n)* is used for the subsequent adaptation of the compensation filtering means 5. In particular, the signal *e(n)* is not directly used for the generation of the actual audio output signal *u(n)*. The thus calculated filter coefficients of the filtering means 5 are used to generate the working signal *ỹ*(*n*) as follows.

To obtain the respective working signal *ỹ*(*n*) for the microphone signal *y(n)* by means of the estimated impulse response represented by *ĥ*(*n*), the microphone signal *y(n)* is delayed by the delay unit 4 and subsequently the feedback components *r̂*(*n*) are subtracted from *y(n)* by the feedback suppression filtering means 3. Convolution of the feedback components *r̂*(*n*) with the estimated impulse response and adding the convolution result to the microphone signal *y(n)* results in the working signal *ỹ*(*n*). Subsequently, *ỹ*(*n*) is used as an input signal for the feedback suppression filtering means 3' that, according to the presently described embodiment, does not include a feedback path.

Adding of the convolution of the feedback components with the estimated impulse response is only performed in the background, i.e. the shadow path, rather than the actual signal path. The signal *ỹ*(*n*) is not used for the audio signal output from the signal processing structure but is used for the adaptation of the (background or shadow path) feedback suppression filtering means 3' a copy of which is subsequently used in the signal path for the generation of the desired loudspeaker output signal *u(n)*. Adaptation is carried out optimizing for the shadow path output *ũ*(*n*) that results from subtracting feedback components from the microphone signal in the shadow path.

The adaptation of the suppression filtering means 3' and accordingly 3 may preferably be performed with relatively small step sizes, e.g., from 10⁻⁵ to 10⁻², if a variant of the NLMS algorithm is used.

As an alternative to the FIR filter used in the above described example, some infinite impulse response (IIR) filter can be used for another advantageous realization of the inventive method. An IIR filter usually is a recursive filter in which the output depends on both an input and a previous output.

Furthermore, the feedback suppression filtering means 3' can be enabled to converge faster by processing the working signal *ỹ*(*n*) by a decorrelation filter (not shown) before inputting it in the suppression filter 3'. Since adaptation is carried out in the shadow path rather than the signal path, no inverse decorrelation filter is to be employed. The decorrelation filter itself may be an adaptive one.

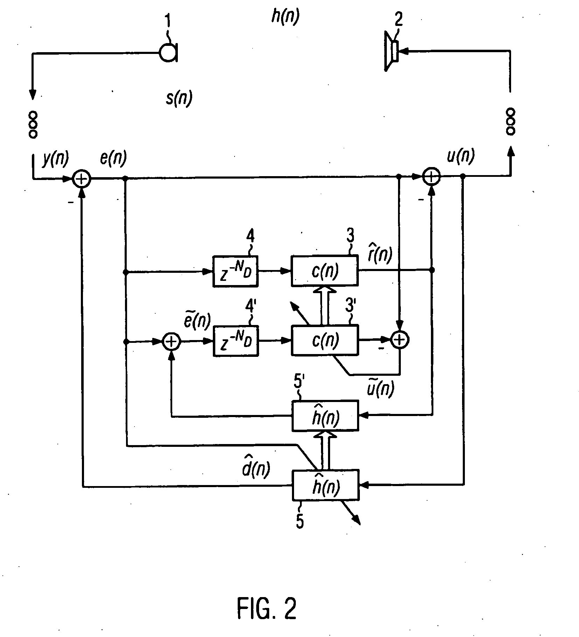

Figure 2 illustrates another embodiment of the inventive method. Different from the example shown in Figure 1 the feedback compensation is performed in the signal path rather than the shadow path.

As in Figure 1 a microphone 1, or a microphone array, detects audio signals output by a loudspeaker 2, or an ensemble of loudspeakers, as well as local signals. A digitized microphone signal *y(n)* is to be input in signal processing means that, in particular, reduce acoustic feedback effects.

By means of the adaptive compensation filter 5 comprising the vector of filter coefficients *ĥ*(*n*), an impulse response is estimated and used to obtain an estimate for the feedback signal *d̂*(*n*), which then is subtracted from the microphone signal *y(n)*. This subtraction results in the reduced signal *e(n)*. A copy of the coefficient vector *ĥ*(*n*) 5' is used to generate the signal *ẽ*(*n*) that after time delay 4' is input in the feedback suppression filtering means 3'.

Convolution of the feedback components *r̂*(*n*) with the estimated impulse response and adding the convolution result to the signal *e(n)* results in the signal *ẽ*(*n*) subsequently representing the input signal to the feedback suppression filter 3' that may be an FIR or and IIR filter, alternatively. Adaptation of the coefficient vector *ĥ*(*n*) of the filter 3' is carried out my means of the signal *ẽ*(*n*) optimizing for the resulting signal *ũ*(*n*). A copy of *ĥ*(*n*) is used to correct the signal *e(n)* for feedback components *r̂*(*n*) by means of the adaptive feedback suppression filter 3. As a result of the signal processing with feedback suppression the signal *u(n)* is output by the loudspeaker.

Usage of decorrelation and inverse decorrelation filters can fasten the adaptation processes. If more than one microphone is used, a beamforming means may advantageously be used. Additional employment of adaptive or non-adaptive noise reduction filters may be provided.

The example described with reference to Figure 2 can, e.g., advantageously be applied to hearing aids. In this case it may be preferred to provide for a phase shift of the processed microphone signal, i.e. a phase shift between *y(n)* and *u(n)*, by an appropriate choice of the feedback suppression filtering means 3 and 3', respectively.

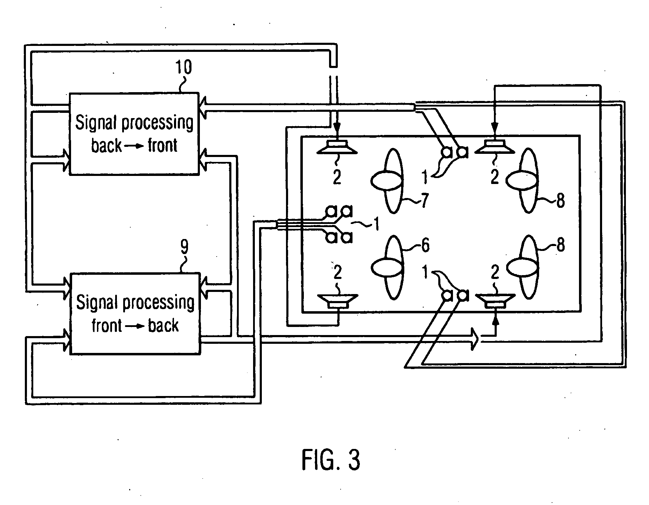

Figure 3 illustrates a vehicle communication system. Close to the driver 6, the front-passenger 7 and the back-passengers 8, respectively, microphones 1 and loudspeakers 2 are installed in the vehicular cabin. In particular, communication between front- and back-passengers can be facilitated by means of the vehicle communication system.

Verbal utterances of the driver 6, for example, are detected by the microphones 1 that are positioned closest to him and the speech signals, that are processed by a signal processing means 9 comprising feedback reduction, can be output to one or more back-seat passengers 8. Accordingly, verbal utterances of a back-seat passenger 8 are detected by the microphones 1 closest to him, and after signal processing 10 directed to the driver 6.

The signal processing means 9 and 10 are characterized by improved feedback reduction, i.e. the vehicle communication system comprises adaptive feedback suppression filters and feedback compensation filters as described, for example, with reference to Figures 1 and 2. This implies that the processing of signals input at the back and output at the front 9 and the processing of signals input at the front and output at the back 10 are not independent on each other as indicated by the arrows connecting 9 and 10. The means 9 and 10 may represent units that are physically and/or logically separated from each other.

All previously discussed embodiments are not intended as limitations but serve as examples illustrating features and advantages of the invention. It is to be understood that some or all of the above described features can also be combined in different ways.

## Claims

1. Method for processing a microphone signal (y(n)) to obtain an output signal (u(n)) with acoustic feedback reduction, comprising
processing the microphone signal (y(n)) by an adaptive feedback suppression filtering means (3, 3') in a signal path and in a non-signal path;
processing the microphone signal (y(n)) by an adaptive feedback compensation filtering means (5);
characterize by
generating a first input signal (*ỹ*(*n*),*ẽ*(*n*)) from the microphone signal (y(n)) and the convolution result of an estimated impulse response obtained by the adaptive feedback compensation filtering means (5) and feedback components (*r̂*(*n*)) of the microphone signal (y(n)) previously obtained by processing the microphone signal (y(n)) by the adaptive feedback suppression filtering means (3, 3') and inputting the first input signal (*ỹ*(*n*),*ẽ*(*n*)) in the non-signal path, and wherein
the microphone signal (y(n)) is input in the signal path and the filter coefficients (c(n)) of the adaptive feedback suppression filtering means (3, 3') are adapted on the basis of the first input signal (*ỹ*(*n*),*ẽ*(*n*)) in the non-signal path and subsequently the adapted filter coefficients (c(n)) are used in the signal path.

2. Method according to claim 1, wherein the adapted filter coefficients (c(n)) are used without modifications in the signal path.

3. Method according to claim 1 or 2, further comprising processing the first input signal (*ỹ*(*n*),*ẽ*(*n*)) by an adaptive or non-adaptive decorrelation filtering means.

4. Method according to one of the above claims, wherein the adaptive feedback suppression filtering means (3, 3') comprises a finite impulse response filter or an infinite impulse response filter.

5. Method according to one of the above claims, wherein adaptation of the filter coefficients (c(n)) of the adaptive feedback suppression filtering means (3, 3') and/or the adaptive feedback compensation filtering means (5) is performed on the basis of a normalized least mean square algorithm.

6. Method according to one of the above claims, wherein the microphone signal (y(n)) and/or the output signal (u(n)) is processed by an adaptive and/or non-adaptive noise reduction filtering means.

7. Method according to one of the above claims, wherein the microphone signal (y(n)) is obtained by an adaptive or non-adaptive beamforming means that processes signals detected by at least two microphones (1).

8. Computer program product, comprising one or more computer readable media having computer-executable instructions for performing the steps of the method according to one of the Claims 1-7.

9. System for audio signal processing with feedback reduction, comprising
an adaptive feedback compensation filtering means (5);
an adaptive feedback suppression filtering means (3, 3') comprising a signal path and a non-signal path and configured to adapt its filter coefficients (c(n)) in the non-signal path and to subsequently use the filter coefficients (c(n)) adapted in the non-signal path in the signal path;
**characterized by**
means for generating a first input signal (*ỹ*(*n*),*ẽ*(*n*)) for the adaptive feedback suppression filtering means (3, 3') from the microphone signal (y(n)) and the convolution result of an estimated impulse response obtained by the adaptive feedback compensation filtering means (5) and feedback components (*r̂*(*n*)) of the microphone signal (y(n)) previously obtained by processing the microphone signal (y(n)) by the adaptive feedback suppression filtering means (3, 3'); and that
the adaptive feedback suppression filtering means (3, 3') is configured to be adapted on the basis of the first input signal (*ỹ*(*n*),*ẽ*(*n*)), and
the system is configured to input the first signal in the non-signal path, and to input the microphone signal (y(n)) in the signal path.

10. System according to claim 9, wherein the adaptive feedback suppression filtering means (3, 3') is configured to use the filter coefficients (c(n)) adapted in the non-signal path without modifications in the signal path.

11. System according to claim 9 or 10, further comprising an adaptive or non-adaptive decorrelation filtering means configured to process the first input signal (*ỹ*(*n*),*ẽ*(*n*)).

12. System according to one of the claims 9 - 11, wherein the adaptive feedback suppression filtering means (3, 3') comprises a finite impulse response filter or an infinite impulse response filter.

13. System according to one of the claims 9 - 12, wherein the adaptive feedback suppression filtering means (3, 3') and/or the adaptive feedback compensation filtering means (5) are configured to be adapted by means of a normalized least mean square algorithm.

14. System according to one of the claims 9 - 13, further comprising adaptive and/or non-adaptive noise reduction filtering means.

15. System according to one of the claims 9 -14, further comprising a microphone array comprising at least two microphones and an adaptive or non-adaptive beamforming means.

16. Acoustic hearing apparatus comprising a system according to one of the claims 9-14.

17. Vehicle communication system comprising a system according to one of the claims 9-15.

## Patentansprüche

1. Verfahren zum Verarbeiten eines Mikrofonsignals (y(n)), um ein Ausgabesignal (u(n)) mit Verringerung einer akustischen Rückkopplung zu erhalten, das umfasst
Verarbeiten des Mikrofonsignals (y(n)) durch eine adaptive Rückkopplungsunterdrückungsfiltereinrichtung (3, 3') in einem Signalpfad und in einem Nicht-Signalpfad;
Verarbeiten des Mikrofonsignals (y(n)) durch eine adaptive Rückkopplungskompensationsfiltereinrichtung (5);
**gekennzeichnet durch**
Erzeugen eines ersten Eingabesignals (*ỹ*(*n*), *ẽ*(*n*)) aus dem Mikrofonsignal (y(n)) und dem Faltungsergebnis einer geschätzten Impulsantwort, die **durch** die adaptive Rückkopplungskompensationsfiltereinrichtung (5) erhalten wird, und Rückkopplungskomponenten (*r̂*(*n*)) des Mikrofonsignals (y(n)), die zuvor **durch** Verarbeiten des Mikrofonsignals (y(n)) **durch** die adaptive Rückkopplungsunterdrückungsfiltereinrichtung (3, 3') erhalten worden sind, und Eingeben des ersten Eingabesignals (*ỹ*(*n*), *ẽ(n*)) in den Nicht-Signalpfad, und wobei
das Mikrofonsignal (y(n)) in den Signalpfad eingegeben wird, und die Filterkoeffizienten (c(n)) der adaptiven Rückkopplungsunterdrückungsfiltereinrichtung (3, 3') auf der Grundlage des ersten Eingabesignals *(ỹ*(*n*), *ẽ*(*n*)) in dem Nicht-Signalpfad adaptiert werden, und die adaptierten Filterkoeffizienten (c(n)) danach in dem Signalpfad verwendet werden.

2. Verfahren gemäß Anspruch 1, in dem die adaptierten Filterkoeffizienten (c(n)) in dem Signalpfad ohne Änderungen verwendet werden.

3. Verfahren gemäß Anspruch 1 oder 2, weiterhin das Verarbeiten des ersten Eingabesignals (*ỹ*(*n*), *ẽ(n*)) durch eine adaptive oder nicht-adaptive Dekorrelationsfiltereinrichtung umfassend.

4. Verfahren gemäß einem der vorhergehenden Ansprüche, in dem die adaptive Rückkopplungsunterdrückungsfiltereinrichtung (3, 3') ein Filter mit endlicher Impulsantwort oder ein Filter mit unendlicher Impulsantwort umfasst.

5. Verfahren gemäß einem der vorhergehenden Ansprüche, in dem die Adaption der Filterkoeffizienten (c(n)) der adaptiven Rückkopplungsunterdrückungsfiltereinrichtung (3, 3') und/oder der adaptiven Rückkopplungskompensationsfiltereinrichtung (5) auf der Grundlage eines Verfahrens der normierten kleinsten Fehlerquadrate ausgeführt wird.

6. Verfahren gemäß einem der vorhergehenden Ansprüche, in dem das Mikrofonsignal (y(n)) und/oder das Ausgabesignal (u(n)) durch eine adaptive und/oder nicht-adaptive Geräuschverringerungsfiltereinrichtung verarbeitet wird.

7. Verfahren gemäß einem der vorhergehenden Ansprüche, in dem das Mikrofonsignal (y(n)) durch eine adaptive oder nicht-adaptive Beamformer-Einrichtung erhalten wird, die Signale verarbeitet, die von zumindest zwei Mikrofonen (1) detektiert werden.

8. Computerprogrammprodukt, das ein oder mehrere computerlesbare Medien umfasst, die von einem Computer ausführbare Anweisungen zum Ausführen der Schritte des Verfahrens gemäß einem der Ansprüche 1 - 7 aufweisen.

9. System zur Verarbeitung von Audiosignalen mit einer Rückkopplungsverringerung, das umfasst
eine adaptive Rückkopplungskompensationsfiltereinrichtung (5);
eine adaptive Rückkopplungsunterdrückungsfiltereinrichtung (3, 3'), die einen Signalpfad und einen Nicht-Signalpfad umfasst und dazu ausgebildet ist, ihre Filterkoeffizienten (c(n)) in dem Nicht-Signalpfad zu adaptieren und danach die Filterkoeffizienten (c(n)), die in dem Nicht-Signalpfad adaptiert worden sind, in dem Signalpfad zu verwenden;
**gekennzeichnet durch**
eine Einrichtung zum Erzeugen eines ersten Eingabesignals (*ỹ*(*n*), *ẽ(n*)) für die adaptive Rückkopplungsunterdrückungsfiltereinrichtung (3, 3') aus dem Mikrofonsignal (y(n)) und dem Faltungsergebnis einer geschätzten Impulsantwort, die durch die adaptive Rückkopplungskompensationsfiltereinrichtung (5) erhalten wird, und Rückkopplungskomponenten (*r̂*(*n*)) des Mikrofonsignals (y(n)), die zuvor **durch** Verarbeiten des Mikrofonsignals (y(n)) **durch** die adaptive Rückkopplungsunterdrückungsfiltereinrichtung (3, 3') erhalten worden sind; und **dadurch**, dass
die adaptive Rückkopplungsunterdrückungsfiltereinrichtung (3, 3') dazu ausgebildet ist, auf der Grundlage des ersten Eingabesignals (*ỹ*(*n*), *ẽ*(*n*)) adaptiert zu werden, und
das System dazu ausgebildet ist, das erste Signal in den Nicht-Signalpfad einzugeben und das Mikrofonsignal (y(n)) in den Signalpfad einzugeben.

10. System gemäß Anspruch 9, in dem die adaptive Rückkopplungsunterdrückungsfiltereinrichtung (3, 3') dazu ausgebildet ist, die Filterkoeffizienten (c(n)), die in dem Nicht-Signalpfad adaptiert worden sind, ohne Änderungen in dem Signalpfad zu verwenden.

11. System gemäß Anspruch 9 oder 10, weiterhin eine adaptive oder nicht-adaptive Dekorrelationsfiltereinrichtung umfassend, die dazu ausgebildet ist, das erste Eingabesignal (*ỹ*(*n*), *ẽ*(*n*)) zu verarbeiten.

12. System gemäß einem der Ansprüche 9-11, in dem die adaptive Rückkoppfungsunterdrückungsfiltereinrichtung (3, 3') ein Filter mit endlicher Impulsantwort oder ein Filter mit unendlicher Impulsantwort umfasst.

13. System gemäß einem der Ansprüche 9 -12, in dem die adaptive Rückkopplungsunterdrückungsfiltereinrichtung (3, 3') und/oder die adaptive Rückkopplungskompensationsfiltereinrichtung (5) dazu ausgebildet sind, mithilfe eines Algorithmus eines normierten kleinsten Fehlerquadrats adaptiert zu werden.

14. System gemäß einem der Ansprüche 9-13, weiterhin eine adaptive und/oder nicht-adaptive Geräuschverringerungsfiltereinrichtung umfassend.

15. System gemäß einem der Ansprüche 9 - 14, weiterhin eine Mikrofonanordnung, die zumindest zwei Mikrofone umfasst, und eine adaptive oder nicht-adaptive Beamformer-Einrichtung umfassend.

16. Hörgerät, das ein System gemäß einem der Ansprüche 9-14 umfasst.

17. Fahrzeugkommunikationssystem, das ein System gemäß einem der Ansprüche 9 -15 umfasst.

## Revendications

1. Procédé pour le traitement d'un signal de microphone (y(n)), permettant d'obtenir un signal de sortie (u(n)) avec une réduction de la rétroaction acoustique, le procédé comprenant les étapes consistant à :
traiter le signal de microphone (y(n)) par des moyens de filtrage pour une suppression adaptative de la rétroaction (3, 3') dans une ligne d'acheminement des signaux et dans une ligne non d'acheminement de signaux ;
traiter le signal de microphone (y(n)) par des moyens de filtrage pour une compensation adaptative de la rétroaction (5) ;
**caractérisé par** les étapes consistant à :
générer un premier signal d'entrée (ỹ*(*n), ẽ(n)) à partir du signal de microphone (y(n)) et du résultat de la convolution d'une réponse estimée en impulsion obtenu par les moyens de filtrage pour une compensation adaptative de la rétroaction (5) et des composantes de rétroaction (r̂(n)) du signal de microphone (y(n)) préalablement obtenues par le traitement du signal de microphone (y(n)) par les moyens de filtrage pour une suppression adaptative de la rétroaction (3, 3'), et à entrer le premier signal d'entrée (ỹ*(*n), ẽ(n)) dans la ligne non d'acheminement de signaux ;
et dans lequel :
le signal de microphone (y(n)) est entré dans la ligne d'acheminement des signaux, et les coefficients de filtrage (c(n)) des moyens de filtrage pour une suppression adaptative de la rétroaction (3, 3') sont adaptés sur la base du premier signal d'entrée (ỹ*(*n), ẽ(n)) dans la ligne non d'acheminement de signaux et, à la suite de cela, les coefficients de filtrage adaptés (c(n)) sont utilisés dans la ligne d'acheminement des signaux.

2. Procédé selon la revendication 1, dans lequel les coefficients de filtrage adaptés (c(n)) sont utilisés sans modifications dans la ligne d'acheminement des signaux.

3. Procédé selon la revendication 1 ou 2, comprenant par ailleurs l'étape consistant à traiter le premier signal d'entrée (ỹ*(*n), ẽ(n)) par des moyens de filtrage pour une décorrélation adaptative ou non adaptive.

4. Procédé selon l'une quelconque des revendications précédentes, dans lequel les moyens de filtrage pour une suppression adaptative de la rétroaction (3, 3') comprennent un filtre à réponse finie à une impulsion ou un filtre à réponse infinie à une impulsion.

5. Procédé selon l'une quelconque des revendications précédentes, dans lequel une adaptation des coefficients de filtrage (c(n)) des moyens de filtrage pour une suppression adaptative de la rétroaction (3, 3') et / ou des moyens de filtrage pour une compensation adaptative de la rétroaction (5) est accompli sur la base d'un algorithme normalisé des moindres carrés moyens.

6. Procédé selon l'une quelconque des revendications précédentes, dans lequel le signal de microphone (y(n)) et / ou le signal de sortie (u(n)) est traité par des moyens de filtrage pour une réduction adaptative et / ou non adaptative du bruit.

7. Procédé selon l'une quelconque des revendications précédentes, dans lequel le signal de microphone (y(n)) est obtenu par des moyens de formation de faisceau adaptative ou non adaptative qui traitent des signaux détectés par au moins deux microphones (1).

8. Produit programme d'ordinateur, comprenant un ou plusieurs supports lisibles par un ordinateur contenant des instructions exécutables par un ordinateur pour accomplir les étapes du procédé selon l'une des revendications 1 à 7.

9. Système pour un traitement de signaux audio avec réduction de la rétroaction, comprenant des moyens de filtrage pour une compensation adaptative de la rétroaction (5) ;
des moyens de filtrage pour une suppression adaptative de la rétroaction (3, 3') comprenant une ligne d'acheminement des signaux et une ligne non d'acheminement de signaux, et configurés pour adapter leurs coefficients de filtrage (c(n)) dans la ligne non d'acheminement de signaux et pour, à la suite de cela, utiliser les coefficients de filtrage (c(n)) adaptés dans la ligne non d'acheminement de signaux dans la ligne d'acheminement des signaux ;
**caractérisé par** :
des moyens pour générer un premier signal d'entrée (ỹ*(*n), ẽ(n)) pour les moyens de filtrage pour une suppression adaptative de la rétroaction (3, 3') à partir du signal de microphone (y(n)) et du résultat de la convolution d'une réponse estimée en impulsion obtenu par les moyens de filtrage pour une compensation adaptative de la rétroaction (5) et des composantes de rétroaction (r̂(n)) du signal de microphone (y(n)) préalablement obtenues par le traitement du signal de microphone (y(n)) par les moyens de filtrage pour une suppression adaptative de la rétroaction (3, 3') ; et en ce que :
les moyens de filtrage pour une suppression adaptative de la rétroaction (3, 3') sont configurés pour être adaptés sur la base du premier signal d'entrée (ỹ*(*n), ẽ(n)) ; et
le système est configuré pour entrer le premier signal dans la ligne non d'acheminement de signaux, et pour entrer le signal de microphone (y(n)) dans la ligne d'acheminement des signaux.

10. Système selon la revendication 9, dans lequel les moyens de filtrage pour une suppression adaptative de la rétroaction (3, 3') sont configurés pour utiliser les coefficients de filtrage (c(n)) adaptés dans la ligne non d'acheminement de signaux sans modifications dans la ligne d'acheminement des signaux.

11. Système selon la revendication 9 ou 10, comprenant par ailleurs des moyens de filtrage pour une décorrélation adaptative ou non adaptive configurés pour traiter le premier signal d'entrée (ỹ*(*n), ẽ(n)).

12. Système selon l'une des revendications 9 à 11, dans lequel les moyens de filtrage pour une suppression adaptative de la rétroaction (3, 3') comprennent un filtre à réponse finie à une impulsion ou un filtre à réponse infinie à une impulsion.

13. Système selon l'une des revendications 9 à 12, dans lequel les moyens de filtrage pour une suppression adaptative de la rétroaction (3, 3') et/ou les moyens de filtrage pour une compensation adaptative de la rétroaction (5) sont configurés pour être adaptés sur la base d'un algorithme normalisé des moindres carrés moyens.

14. Système selon l'une des revendications 9 à 13, comprenant par ailleurs des moyens de filtrage pour une réduction adaptative et/ou non adaptative du bruit.

15. Système selon l'une des revendications 9 à 14, comprenant par ailleurs un ensemble de microphones comprenant au moins deux microphones et des moyens de formation de faisceau adaptative ou non adaptative.

16. Appareil d'écoute acoustique comprenant un système selon l'une des revendications 9 à 14.

17. Système de communication d'un véhicule comprenant un système selon l'une des revendications 9 à 15.
